# EUROPEAN PATENT APPLICATION

(11) **EP 3 330 554 A1**
(43) Date of publication of application: **06.06.2018**
(21) Application number: 16830273.5
(22) Date of filing: 08.07.2016
(51) Int. Cl.: F16C 11/06, F16J 3/04, F16J 15/52

(54) **BALL JOINT DUST COVER**

(30) Priority: 27.07.2015 JP 2015147439
(71) Applicant: NOK Corporation, Tokyo 105-8585 (JP)
(72) Inventor: HIROTA, Takuma, Makinohara-shi Shizuoka 421-0532 (JP)
(74) Representative: Nordic Patent Service A/S
(86) International application number: PCT/JP2016/070273
(87) International publication number: WO 2017/018168

(57) **Abstract**

It is an object of the present invention to provide a dust cover for a ball joint that can prevent progress of wear and ensure sealing properties for a long time even if muddy water or rust particles enter a stud mounting part side. A dust cover A for a ball joint includes a cover body 1 made of an elastic material, a stud mounting part 2 that is included in one end of the cover body 1 and into which a stud 4 of a ball joint B is inserted, and a socket mounting part 3 that is included in the other end of the cover body 1 and is mounted to a socket 5 holding a spherical head part 42 of the stud 4. In the dust cover A for a ball joint, the stud mounting part 3 includes a fixed part 22 to be held on and fixed to the stud 4, and the socket mounting part 3 includes a sliding part to be slidably attached to the socket 5.

## Description

### TECHNICAL FIELD

The present invention relates to a dust cover for a ball joint. In particular, the present invention relates to a dust cover for a ball joint that can preferably maintain sealing properties even when a pinch bolt ball joint is used.

### BACKGROUND

Many ball joints are used in suspension systems and steering gears of automobiles, for example. A ball joint is filled with grease to smooth the motion, and is usually covered with a dust cover to prevent a leak of the grease and an entry of water and dust from the outside.

Ball joints include taper alignment ball joints and pinch bolt ball joints, which differ from each other in how to fasten a knuckle to a stud.

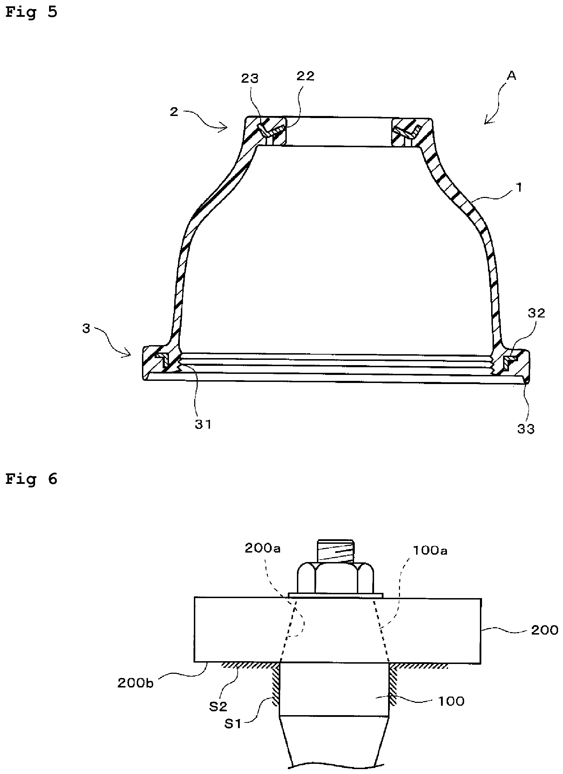

For a taper alignment ball joint, the position of a knuckle 200 is determined so that a tapered outer peripheral surface 100a of a stud 100 overlaps an inner peripheral surface 200a of the knuckle 200, as illustrated in FIG. 6.

The taper alignment ball joint has a dust lip on one end face on the small diameter side of a dust cover into which the stud is inserted. The dust lip comes into close contact with the underside of the knuckle so as to seal the space with the knuckle. Thus, the sealed areas by the dust cover are formed from the outer peripheral surface 100a of the stud 100 to a lower end face 200b of the knuckle 200, as indicated by signs S1 and S2 in FIG. 6.

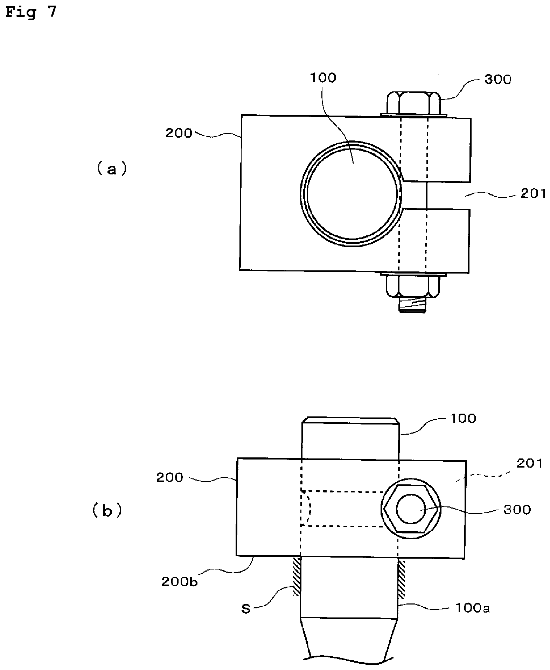

By contrast, a pinch bolt ball joint has a structure in which the knuckle 200 is fastened to the stud 100 with a bolt 300, and a slitting groove 201 is formed in the knuckle 200, as illustrated in FIG. 7(a) and FIG. 7(b).

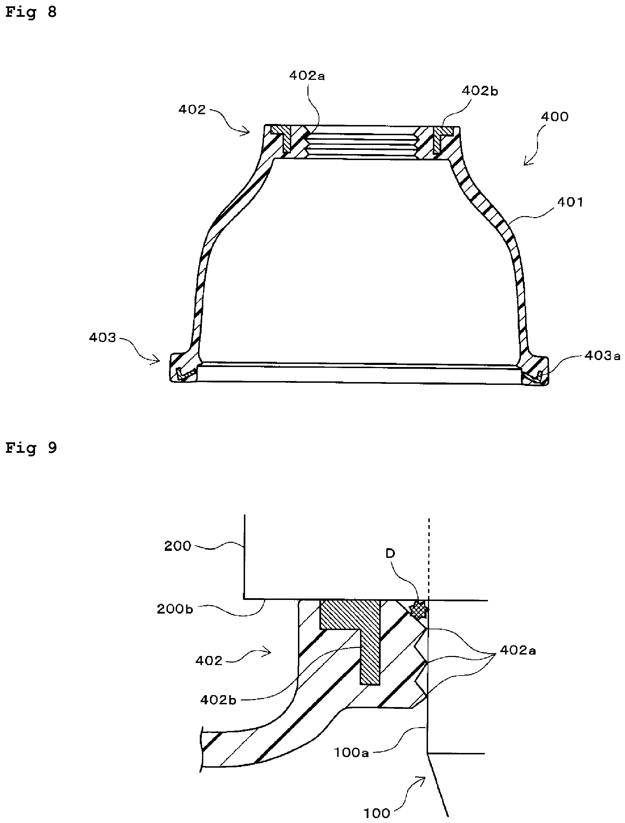

FIG. 8 is a sectional view of a dust cover generally used for such a pinch bolt ball joint. In a dust cover 400, one end (top end in the drawing) of a cover body 401 is a stud mounting part 402, and the other end (bottom end in the drawing) is a socket mounting part 403.

On the inner peripheral surface of the stud mounting part 402, a plurality of seal lip parts 402a are formed that comes into close contact with the outer peripheral surface 100a of the stud 100 for sealing. A reinforcement ring 402b is buried inside of the stud mounting part 402. The stud mounting part 402 is slidably attached to the outer peripheral surface 100a of the stud 100. Thus, the stud mounting part 402 slides in response to sway of the stud 100, thereby serving as a sliding part to prevent a twist of the cover body 401.

The socket mounting part 403 is a fixed part to be fixed to the outer peripheral surface of a socket (not illustrated in FIG. 7), and a metal ring 403a is buried inside of the socket mounting part 403. The socket mounting part 403 is press-fitted (metal-fitted) to the outer peripheral surface of the socket so as to be immovably fixed to the outer peripheral surface of the socket even if the stud 100 sways.

On the stud mounting part 402 side of the dust cover 400 to be mounted into such a pinch bolt ball joint, no dust lip can be provided that is in contact with the lower end face 200b of the knuckle 200 because the slitting groove 201 is formed in the knuckle 200. Thus, the sealed area by the dust cover 400 is formed only on the outer peripheral surface 100a of the stud 100, as indicated by a sign S in FIG. 7(b).

For this reason, the stud mounting part 402 side of the dust cover 400 has such a structure that muddy water or rust particles of the knuckle 200 enter easily from the slitting groove 201. If muddy water or a rust particle enters, mud or rust particles D deposit between the stud mounting part 402 of the dust cover 400 and the outer peripheral surface 100a of the stud 100, as illustrated in FIG. 9. The dust cover 400 sliding in this state problematically accelerates wear in the seal lip part and tends to impair sealing properties.

### PRIOR ART DOCUMENT

### PATENT DOCUMENT

Patent Document 1: JP-A-11-108044
Patent Document 2: JP-UM-A-4-127471

### SAMMARY OF THE INVENTION

### PROBLEM TO BE SOLVED BY THE INVENTION

It is an object of the present invention to provide a dust cover for a ball joint that can prevent progress of wear and ensure sealing properties for a long time even if muddy water or rust particles enter a stud mounting part side.

Other objects of the present invention will be apparent from the following description.

### MEANS FOR SOLVING PROBLEM

The above-described problems are solved by the following respective inventions.

1. A dust cover for a ball joint comprising:
   a cover body made of an elastic material;
   a stud mounting part that is included in one end of the cover body and into which a stud of a ball joint is inserted; and
   a socket mounting part that is included in another end of the cover body and is mounted to a socket holding a spherical head part of the stud, wherein
   the stud mounting part includes a fixed part to be held on and fixed to the stud, and
   the socket mounting part includes a sliding part to be slidably attached to the socket.
2. The dust cover for a ball joint according to 1, wherein the fixed part of the stud mounting part is held on and fixed to an outer peripheral surface of the stud by rubber-fitting.
3. The dust cover for a ball joint according to 2, wherein a reinforcement ring is buried in the stud mounting part and assists in the rubber-fitting.
4. The dust cover for a ball joint according to 1, wherein the fixed part of the stud mounting part is held and fixed by being metal-fitted to an outer peripheral surface of the stud by a metal ring buried in the stud mounting part.
5. The dust cover for a ball joint according to any one of 1 to 4, wherein a seal lip part that comes into close contact with the socket is provided on an inner peripheral surface of the socket mounting part.
6. The dust cover for a ball joint according to any one of 1 to 5, wherein a dust lip part annularly protruding is provided on a lower end face of the socket mounting part.

### EFFECT OF THE INVENTION

With the present invention, a dust cover for a ball joint can be provided that can prevent progress of wear and ensure sealing properties for a long time even if muddy water or rust particles enter a stud mounting part side. In particular, the dust cover for a ball joint according to the present invention can be preferably used for a pinch bolt ball joint.

### BRIEF DESCRIPTION OF DRAWINGS

FIG. 1 is a sectional view illustrating an embodiment of a dust cover for a ball joint according to the present invention;
FIG. 2 is a sectional view illustrating an embodiment of a pinch bolt ball joint with the dust cover illustrated in FIG. 1 mounted thereto;
FIG. 3 is an enlarged sectional view illustrating an attaching structure of the dust cover illustrated in FIG. 2 to a stud of the pinch bolt ball joint;
FIG. 4 is an enlarged sectional view illustrating an attaching structure of the dust cover illustrated in FIG. 2 to a socket of the pinch bolt ball joint;
FIG. 5 is a sectional view illustrating another embodiment of a dust cover for a ball joint according to the present invention;
FIG. 6 is a side view of main parts of a taper alignment ball joint;
FIG. 7(a) is a plan view of main parts of a pinch bolt ball joint; FIG. 7(b) is a side view of main parts of the pinch bolt ball joint;
FIG. 8 is a sectional view illustrating an example of a dust cover to be mounted to a conventional pinch bolt ball joint; and
FIG. 9 is an enlarged sectional view illustrating an attaching structure of the dust cover illustrated in FIG. 8 to a stud of the pinch bolt ball joint.

### DESCRIPTION OF THE PREFERRED EMBODIMENTS

The following describes embodiments of the present invention with reference to the drawings.

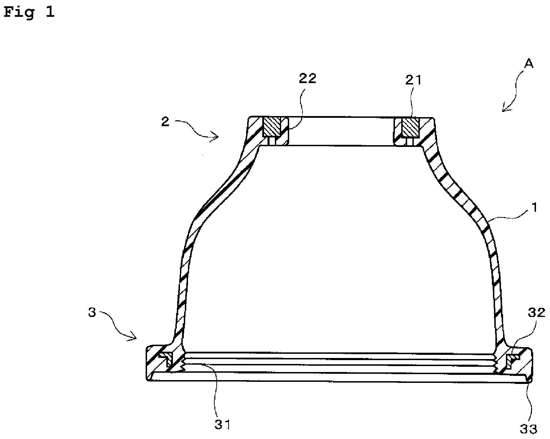

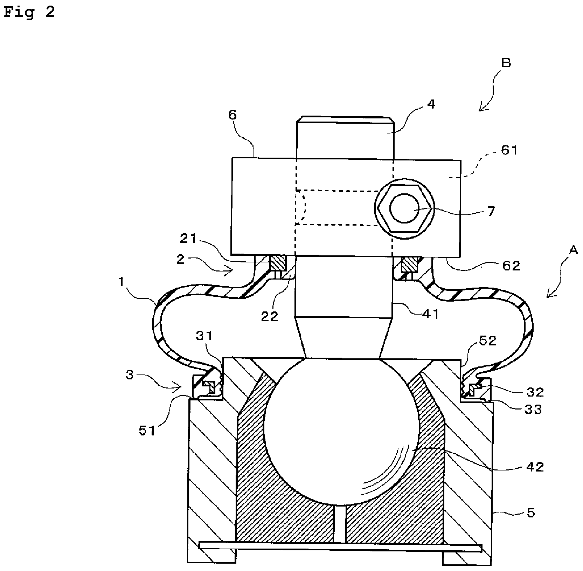

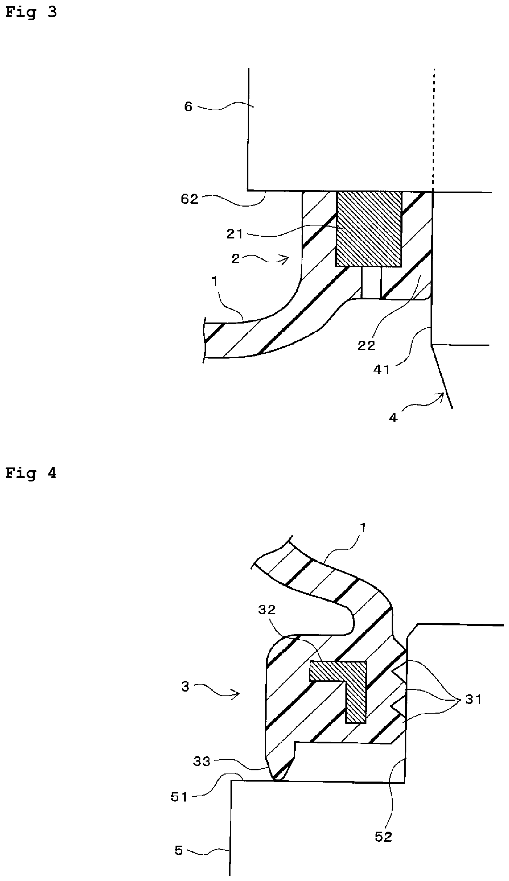

FIG. 1 is a sectional view illustrating an embodiment of a dust cover for a ball joint according to the present invention. FIG. 2 is a sectional view illustrating an embodiment of a pinch bolt ball joint with the dust cover illustrated in FIG. 1 mounted thereto. FIG. 3 is an enlarged sectional view illustrating an attaching structure of the dust cover illustrated in FIG. 2 to a stud of the pinch bolt ball joint. FIG. 4 is an enlarged sectional view illustrating an attaching structure of the dust cover illustrated in FIG. 2 to a socket of the pinch bolt ball joint.

A dust cover A includes a cover body 1 formed of an elastic material in a cup shape, a stud mounting part 2 of small diameter open to the upper part of the dust cover A, and a socket mounting part 3 open to the lower part thereof. Specific examples of the elastic material include a rubber elastic material made of chloroprene, a polyester elastomer, and a thermoplastic elastomer such as thermoplastic polyurethane, which are appropriately selected to be used in accordance with the application.

The stud mounting part 2 is open and small in diameter, whereby a stud 4 of a ball joint B can be inserted thereinto. The stud mounting part 2 is a section to be held on and fixed to an outer peripheral surface 41 of the stud 4, and a reinforcement ring 21 made of synthetic resin or metal is buried inside thereof. A portion of the stud mounting part 2 closer to the inner peripheral side than the reinforcement ring 21 serves as a fixed part 22 in which the elastic material is formed in uniform thickness over the whole periphery of the inner peripheral surface of the reinforcement ring 21.

The inner peripheral surface of the stud mounting part 2, which is constituted by the fixed part 22 made of the elastic material, does not include a seal lip part conventionally provided thereto, and is a flat surface throughout the area. The inside diameter of the stud mounting part 2 is set to be smaller than the outside diameter of the stud 4, and, when the stud 4 of the ball joint B is inserted, it is inserted in a pressed-in state, whereby the fixed part 22 can elastically come into close contact with the outer peripheral surface 41 of the stud 4.

With this structure, the stud mounting part 2 is rubber-fitted to the outer peripheral surface 41 of the stud 4 to be immovably held on and fixed to the stud 4 while sealing the space with the outer peripheral surface 41 of the stud 4. The reinforcement ring 21 buried in the stud mounting part 2 supports deformation of the elastic material in the fixed part 22, thereby assisting in the rubber-fitting and functioning so as to stabilize the fitted state.

The other end (bottom end in the drawing) of the dust cover A is the socket mounting part 3 that is open in diameter larger than the stud mounting part 2, whereby the socket mounting part 3 can be attached to a socket 5 of the ball joint B. The socket 5 is a member for rotatably holding a spherical head part 42 of the stud 4.

The socket mounting part 3 is a sliding part to be slidably attached to the socket 5, and has, on the inner peripheral surface thereof, a plurality of seal lip parts 31 extending in the circumferential direction. A reinforcement ring 32 made of synthetic resin or metal is buried in the socket mounting part 3. An annular dust lip part 33 is disposed that protrudes downward, on the lower end face of the socket mounting part 3.

A positioning step part 51 is formed against which the bottom end of the dust cover A is butted, on the top end part of the socket 5. The dust lip part 33 of the socket mounting part 3 is butted against the positioning step part 51, and the seal lip parts 31 on the inner peripheral surface of the dust cover A slidably come into close contact with an outer peripheral surface of a small diameter part 52 that is closer to the tip side than the positioning step part 51 is, whereby the dust cover A is slidably attached to the socket 5.

Consequently, when the stud 4 and the socket 5 sway relatively to each other, the socket mounting part 3 side of the dust cover A slides on the socket 5 in response to the sway, thereby preventing a twist of the cover body 1 caused by the sway.

In order to attach the dust cover A structured as described above to the ball joint B, the dust lip part 33 of the socket mounting part 3 is brought into contact with the positioning step part 51 of the socket 5, and also, the seal lip parts 31 are pressed in the outer peripheral surface of a small diameter part 52 of the socket 5 in such a manner that the seal lip parts 31 are brought into close contact with the outer peripheral surface of a small diameter part 52, whereby the socket mounting part 3 is mounted to the socket 5. Meanwhile, the stud 4 is inserted into the stud mounting part 2 in the pressed-in state, whereby the stud mounting part 2 is immovably fixed to the outer peripheral surface 41 of the stud 4.

A knuckle 6 having a slitting groove 61 is then attached to the end of the stud 4 protruding from the stud mounting part 2 of the dust cover A, and is fixed by a bolt 7, whereby the dust cover A is mounted between the socket 5 and the knuckle 6 so as to cover around the stud 4. At this time, the stud mounting part 2 of the dust cover A is fixed to the outer peripheral surface 41 of the stud 4, so that a sealed area is formed and the upper end face of the stud mounting part 2 is in contact with a lower end face 62 of the knuckle 6.

Because the slitting groove 61 is formed in the knuckle 6, muddy water or rust particles may enter the knuckle 6 through the slitting groove 61 toward the stud mounting part 2. The stud mounting part 2, however, is immovably fixed to the outer peripheral surface 41 of the stud 4 and does not slide, so that there is no possibility that muddy water or rust particles will accelerate wear. Consequently, wear will not impair sealing properties of the stud mounting part 2.

Meanwhile, the socket mounting part 3 of the dust cover A, which is a sliding part, is away from the knuckle 6. Thus, there is a low possibility that muddy water or rust particles will enter the socket mounting part 3 through the slitting groove 61, and there is an extremely low possibility that muddy water or rust particles will accelerate wear in the socket mounting part 3. Additionally, the socket mounting part 3 is arranged on the grounded side of a vehicle in normal use, which makes it difficult to cause water to enter from the socket mounting part 3. Sealing properties of the socket mounting part 3 can thus be maintained for a long time.

Because the dust cover A according to the present invention requires no change to be made to the stud 4 and the socket 5 of the ball joint B, the dust cover A can also be used as it is for any existing ball joint.

Although the fixed part 22 of the stud mounting part 2 in the embodiment described above is rubber-fitted to the outer peripheral surface 41 of the stud 4 to be held and fixed, the fixed part 22 of the stud mounting part 2 may be metal-fitted to the outer peripheral surface 41 of the stud 4 by a metal ring 23 buried in the stud mounting part 2 in place of the reinforcement ring 21, to be held and fixed, as illustrated in FIG. 5.

The metal ring 23 has an inside diameter that is the same as or slightly smaller than the outside diameter of the stud 4. The metal ring 23 is buried in an elastic material forming the stud mounting part 2 such that the inner peripheral edge of the metal ring 23 is substantially flush with the inner peripheral surface of the fixed part 22 of the stud mounting part 2. With this structure, the inner peripheral edge of the metal ring 23 is metal-fitted to the outer peripheral surface 41 of the stud 4, so that the fixed part 22 of the stud mounting part 2 is held on and fixed to the outer peripheral surface 41 of the stud 4. Such metal-fitting enables the fixed part 22 of the stud mounting part 2 to be held and fixed more securely with a strong fitting force by the metal ring 23 compared with rubber-fitting.

In the present embodiment, the pinch bolt ball joint has been described that uses the knuckle 6 having the slitting groove 61 as the ball joint B to which the dust cover A according to the present invention is applied. The dust cover according to the present invention, however, can be similarly applied to a taper alignment ball joint as illustrated in FIG. 5.

### EXPLANATIONS OF LETTERS OR NUMERALS

A: dust cover
   1: cover body
   2: stud mounting part
      21: reinforcement ring
      22: fixed part
      23: metal ring
   3: socket mounting part
      31: seal lip parts
      32: reinforcement ring
      33: dust lip part
B: ball joint (pinch bolt ball joint)
   4: stud
      41: outer peripheral surface
      42: spherical head part
   5: socket
      51: positioning step part
      52: outer peripheral surface of a small diameter part
   6: knuckle
      61: slitting groove
      62: lower end face
   7: bolt

## Claims

1. A dust cover for a ball joint comprising:
a cover body made of an elastic material;
a stud mounting part that is included in one end of the cover body and into which a stud of a ball joint is inserted; and
a socket mounting part that is included in another end of the cover body and is mounted to a socket holding a spherical head part of the stud, wherein
the stud mounting part includes a fixed part to be held on and fixed to the stud, and
the socket mounting part includes a sliding part to be slidably attached to the socket.

2. The dust cover for a ball joint according to claim 1, wherein the fixed part of the stud mounting part is held on and fixed to an outer peripheral surface of the stud by rubber-fitting.

3. The dust cover for a ball joint according to claim 2, wherein a reinforcement ring is buried in the stud mounting part and assists in the rubber-fitting.

4. The dust cover for a ball joint according to claim 1, wherein the fixed part of the stud mounting part is held and fixed by being metal-fitted to an outer peripheral surface of the stud by a metal ring buried in the stud mounting part.

5. The dust cover for a ball joint according to any one of claims 1 to 4, wherein a seal lip part that comes into close contact with the socket is provided on an inner peripheral surface of the socket mounting part.

6. The dust cover for a ball joint according to any one of claims 1 to 5, wherein a dust lip part annularly protruding is provided on a lower end face of the socket mounting part.
